# EUROPÄISCHE PATENTANMELDUNG

(11) **EP 2 353 728 A1**
(43) Veröffentlichungstag der Anmeldung: **10.08.2011**
(21) Anmeldenummer: 10152421.3
(22) Anmeldetag: 02.02.2010
(51) Int. Cl.: B05B 13/02, A23P 1/08, B01J 2/00, B05B 15/08

(54) **Halterung für Sprühstab**

(71) Anmelder: Bühler AG, 9240 Uzwil (CH)
(72) Erfinder: Vontobel, Stefan, 8500 Frauenfeld (CH); Losenegger, Hans-Rudolf, 9200 Gossau (CH)
(74) Vertreter: Hepp Wenger Ryffel AG

(57) **Zusammenfassung**

Die Erfindung betrifft eine Halterung (1) für eine Sprüheinrichtung mit einem Befestigungselement (3) zum Befestigen der Halterung (1) an einer Behandlungsvorrichtung (10) zum Besprühen von Lebensmitteln und/oder Futtermitteln und mit mindestens einer Aufnahme für eine Sprüheinrichtung. Die Halterung (1) ist derart ausgebildet, dass eine in der Aufnahme aufgenommene Sprüheinrichtung in einer Verschieberichtung (R) relativ zum Befestigungselement (3) verschiebbar ist, insbesondere in eine Sprühkammer der Behandlungsvorrichtung (10) hinein oder aus der Sprühkammer hinaus. Weiterhin ist die Sprüheinrichtung um eine Schwenkachse (S) relativ zum Befestigungselement (3) verschwenkbar ist. Zudem betrifft die Erfindung eine Baugruppe mit einer Sprüheinrichtung und einer Halterung (1) für die Sprüheinrichtung. Ein weiterer Aspekt der Erfindung ist eine Behandlungsvorrichtung (10) zum Besprühen von Lebensmitteln und/oder Futtermitteln mit mindestens einer Sprühkammer und mindestens einer Halterung (1) und/oder mindestens einer Baugruppe. Zudem kann die Behandlungsvorrichtung (10) eine Schikanenhalterung (8) aufweisen, mittels welcher eine Schikane (9) im Inneren der Sprühkammer haltbar ist.

## Beschreibung

Die vorliegende Erfindung betrifft eine Halterung für eine Sprüheinrichtung, eine Baugruppe mit einer Sprüheinrichtung und einer Halterung und eine Behandlungsvorrichtung zum Besprühen von Lebensmitteln und/oder Futtermitteln.

Eine gattungsgemässe Behandlungsvorrichtung zum Besprühen von Lebensmitteln und/oder Futtermitteln ist beispielsweise in EP 231 817 gezeigt. Diese Behandlungsvorrichtung enthält eine Sprühkammer zur Aufnahme von Lebensmitteln und/oder Futtermitteln, die beispielsweise als Formlinge vorliegen können. Die Sprühkammer enthält einen Sprühstab, mit dem diese Formlinge beispielsweise mit einer Flüssigkeit oder einem Pulver besprüht werden können. Dabei kann es sich beispielsweise um Fette, Vitamine, Enzyme oder Säuren handeln. Falls der Sprühstab abgenutzt ist oder gereinigt werden muss, muss er aus der Behandlungsvorrichtung entfernt werden. Auch zum Austausch eines Sprühstabes durch einen anderen Sprühstab mit anderen Eigenschaften, z. B. mit anderen Düsengrössen oder -anordnungen, muss der Sprühstab entfernt werden können. Damit keine langen Wartezeiten entstehen, sollte ein solcher Austausch möglichst schnell bewerkstelligt werden. Darüber hinaus sollte der Austausch möglichst einfach sein und möglichst wenige Arbeitsschritte umfassen. Das Dokument EP 231 817 liefert für dieses Problem keine Lösung.

Ferner ist im Dokument EP 545 044 eine Vorrichtung zum Dragieren von stückigen Produkten offenbart. Die Vorrichtung weist eine Trommel auf, in der eine Einrichtung zum Besprühen mit einem Überzugsstoff angeordnet ist. Die Einrichtung enthält einen Sprühkanal, dessen eines Ende an einem die Trommel verschliessenden Deckel gehalten ist. Der Sprühkanal ist im Bereich seines Endes mittels einer Teleskopführung am Deckel befestigt. Zum Entfernen der Sprüheinrichtung muss diese also zusammen mit dem Deckel entfernt werden und in einem weiteren Schritt von dem Deckel getrennt werden. Darüber hinaus muss beim Einsetzen der am Deckel befestigten Sprüheinrichtung darauf geachtet werden, dass die Sprüheinrichtung nicht an den Rand der Öffnung stösst, auf welche der Deckel aufgesetzt wird. Dies gestaltet sich insbesondere bei schweren Sprüheinrichtungen als äusserst beschwerlich.

Es ist daher eine Aufgabe der vorliegenden Erfindung, eine Halterung für eine Sprüheinrichtung bereitzustellen, bei welcher die aus dem Stand der Technik bekannten Probleme überwunden sind. Insbesondere soll die Halterung ein einfacheres Hineinbewegen der Sprüheinrichtung in die Sprühkammer und/oder Hinausbewegen der Sprüheinrichtung aus der Sprühkammer ermöglichen. Weiterhin soll es die Halterung gestatten, eine Sprüheinrichtung in einer derartigen Position zu halten, dass sie nicht das Hineinbewegen einer anderen Sprüheinrichtung in die Sprühkammer verhindert.

Diese und weitere Aufgaben werden durch eine erfindungsgemässe Halterung für eine Sprüheinrichtung, insbesondere für einen an sich bekannten Sprühstab gelöst. Die Halterung enthält ein Befestigungselement zum Befestigen der Halterung an einer Behandlungsvorrichtung zum Besprühen von Lebensmitteln und/oder Futtermitteln. Insbesondere kann das Befestigungselement zur Befestigung an einem Grundkörper der Behandlungsvorrichtung ausgelegt sein. Unter dem Grundkörper wird dabei ein Bauelement der Behandlungsvorrichtung verstanden, welches sich auch beim Betrieb der Behandlungsvorrichtung nicht bewegt. Weiterhin weist die Halterung mindestens eine Aufnahme für eine Sprüheinrichtung auf, insbesondere für einen Sprühstab.

Erfindungsgemäss ist die Halterung derart ausgebildet, dass eine in der Aufnahme aufgenommene Sprüheinrichtung in einer Verschieberichtung relativ zum Befestigungselement verschiebbar ist und ausserdem um eine Schwenkachse relativ zum Befestigungselement verschwenkbar ist. Insbesondere kann die in der Aufnahme aufgenommene Sprüheinrichtung in eine Sprühkammer der Behandlungsverrichtung hinein oder aus der Sprühkammer hinaus verschoben werden. Da die Halterung mittels des Befestigungselementes an der Behandlungsvorrichtung befestigt ist, führt eine Bewegung der Sprüheinrichtung relativ zur Befestigungsvorrichtung auch zu einer Bewegung relativ zur Behandlungsvorrichtung.

Eine derartige Halterung erlaubt es, eine in der Aufnahme aufgenommene Sprüheinrichtung besonders einfach in die Sprühkammer hinein oder aus der Sprühkammer hinaus zu bewegen. Insbesondere muss nicht (wie beispielsweise in EP 545 044) ein Deckel der Sprühkammer zusammen mit der Sprüheinrichtung entnommen werden. Darüber hinaus kann die in der Aufnahme aufgenommene Sprüheinrichtung verschwenkt werden. Auf diese Weise kann die Sprüheinrichtung beispielsweise in eine derartige Position überführt werden, in welcher eine andere Sprüheinrichtung in die Sprühkammer hineinbewegt werden kann. Darüber hinaus kann die Sprüheinrichtung ohne Werkzeug aus der Sprühkammer hinaus bewegt werden; beispielsweise ist ein Lösen von Schrauben nicht erforderlich.

Aufgrund der Befestigung der Halterung an der Behandlungsvorrichtung kann die relative Lage zwischen Sprüheinrichtung und Behandlungsvorrichtung, insbesondere zwischen Sprühstab und Sprühkammer, einfach und definiert festgelegt werden.

Insbesondere wenn die Halterung am Grundkörper befestigt ist, ist die Position der Sprüheinrichtung relativ zur Sprühkammer und deren Inhalt definiert. Das Sprühbild ist somit leicht reproduzierbar.

Bevorzugt ist die Aufnahme für die Sprüheinrichtung als Schiene ausgebildet, relativ zu welcher die Sprüheinrichtung in die Verschieberichtung verschiebbar ist. Eine solche Schiene gestattet eine besonders einfache Verschiebbarkeit der Sprüheinrichtung. Alternativ oder zusätzlich kann auch die Aufnahme relativ zum Befestigungselement verschiebbar sein. Insbesondere kann sie in der gleichen Verschieberichtung relativ zum Befestigungselement verschiebbar sein wie die Sprüheinrichtung. Folglich ist die Sprüheinrichtung bereits dadurch relativ zum Befestigungselement verschiebbar, dass die Aufnahme relativ zum Befestigungselement verschoben wird, ohne dass die Sprüheinrichtung relativ zur Aufnahme verschoben wird. Auf diese Weise kann die Sprüheinrichtung teleskopartig in die Sprühkammer hinein oder aus dieser hinaus bewegt werden. Zum Hineinbewegen der Sprüheinrichtung in die Sprühkammer kann beispielsweise zunächst die Sprüheinrichtung relativ zur Aufnahme in der Verschieberichtung verschoben werden. Anschliessend kann noch die Aufnahme relativ zum Befestigungselement verschoben werden; hierdurch wird die Sprüheinrichtung noch weiter in die Sprühkammer hinein bewegt.

Vorteilhafterweise verläuft die Schwenkachse unter einem Winkel von höchstens 60° zur Verschieberichtung. Insbesondere dann, wenn die Sprüheinrichtung als länglicher Sprühstab ausgebildet ist und der Sprühstab entlang seiner Längsausdehnung entlang der Verschieberichtung in die Sprühkammer hinein geschoben wird, garantiert ein derartiger Winkel eine relativ kleine Schwenkbewegung. Bevorzugt beträgt der Winkel höchstens 30° und weiter bevorzugt höchstens 10°. Besonders bevorzugt verläuft die Schwenkachse im Wesentlichen parallel zur Verschieberichtung. Bei diesen Ausführungsformen ist die Schwenkbewegung besonders klein und erfordert daher nur einen äusserst geringen Platzbedarf.

In vorteilhaften Ausführungsformen enthält die Halterung einen Schwenkarm, welcher um die Schwenkachse relativ zum Befestigungselement verschwenkbar ist. Dabei ist die Aufnahme am Schwenkarm angeordnet. Insbesondere kann die Aufnahme verschiebbar am Schwenkarm angeordnet sein. Vorteilhafterweise erstreckt sich der Schwenkarm in einer Richtung, die sowohl zur Schwenkachse als auch zur Verschieberichtung im Wesentlichen senkrecht ist. Auch dies macht die Halterung besonders Platz sparend. In einigen Ausführungsformen kann der Schwenkarm selbst teleskopartig verlängerbar sein, was die Halterung noch flexibler einsetzbar macht.

Ein weiterer Aspekt der Erfindung betrifft eine Baugruppe, die mindestens eine Sprüheinrichtung und mindestens eine wie oben beschriebene Halterung für die Sprüheinrichtung aufweist. Bei der Sprüheinrichtung kann es sich etwa um einen Sprühstab handeln. Dabei ist bevorzugt die Halterung derart ausgebildet, dass die Sprüheinrichtung in der Aufnahme der Halterung aufnehmbar ist und hierdurch wie oben beschreiben verschiebbar und verschwenkbar ist. Die Baugruppe weist damit sämtliche Vorteile auf, die bereits oben im Zusammenhang mit der Halterung beschrieben wurden.

Bevorzugt ist die Sprüheinrichtung lösbar mit der Aufnahme verbindbar oder verbunden. Dies erlaubt es, die Sprüheinrichtung von der Aufnahme und damit von der Halterung zu trennen und beispielsweise die Sprüheinrichtung einfach zu reinigen oder durch eine andere Sprüheinrichtung zu ersetzen.

In vorteilhaften Ausführungsformen ist die Halterung derart ausgebildet, dass die in der Aufnahme aufgenommene Sprüheinrichtung in der Verschieberichtung relativ zum Befestigungselement verschiebbar ist, und zwar mindestens um die in der Verschieberichtung gemessene Ausdehnung der Sprüheinrichtung. Hierdurch ist es möglich, die Sprüheinrichtung einerseits in eine Position zu bringen, in welcher sie vollständig in der Sprühkammer aufgenommen ist, und andererseits in eine andere Position, in welcher sie vollständig aus der Sprühkammer entfernt ist. Während der gesamten Bewegung von der ausgefahrenen Position in die eingefahrene Position und umgekehrt kann die Sprüheinrichtung also in der Aufnahme aufgenommen sein. Dies erleichtert das Hineinbewegen der Sprüheinrichtung in die Sprühkammer und das Hinausbewegen der Sprüheinrichtung aus der Sprühkammer erheblich.

Weiterhin betrifft die Erfindung auch eine Behandlungsvorrichtung zum Besprühen von Lebensmitteln und/oder Futtermitteln. Diese Behandlungsvorrichtung enthält mindestens eine Sprühkammer zur Aufnahme des Lebensmittels und/oder des Futtermittels sowie mindestens eine wie oben beschriebene Halterung und/oder mindestens eine wie oben beschriebene Baugruppe. Bei der Sprühkammer kann es sich insbesondere um eine rotierend antreibbare Sprühtrommel handeln. Das Befestigungselement der Halterung ist mit einem Grundkörper der Behandlungsvorrichtung verbunden oder verbindbar. Unter dem Grundkörper wird dabei ein Bauelement der Behandlungsvorrichtung verstanden, welches sich auch beim Betrieb der Behandlungsvorrichtung nicht bewegt. Weiterhin ist die in der Aufnahme aufgenommene Sprüheinrichtung der Baugruppe durch Verschiebung in der Verschieberichtung wahlweise in die Sprühkammer hinein oder aus der Sprühkammer hinaus bewegbar. Wegen der Verschwenkbarkeit der Halterung ist die Sprüheinrichtung auch um die Schwenkachse relativ zum Befestigungselement verschwenkbar. Aufgrund der erfindungsgemässen Ausbildung der Halterung weist auch die Behandlungsvorrichtung die bereits oben erläuterten Vorteile auf.

Bevorzugt verläuft die Verschieberichtung und/oder die Schwenkachse unter einem Winkel zu einer Drehachse, um welche die Sprühtrommel rotierend antreibbar ist. Dabei beträgt der Winkel höchstens 60°, bevorzugt höchstens 30°, weiter bevorzugt höchstens 10°. Besonders bevorzugt verläuft die Verschieberichtung und/oder die Schwenkachse im Wesentlichen parallel zur Drehachse. Ein derartiger Aufbau ist baulich besonders einfach und überdies äusserst Platz sparend.

Vorteilhafterweise ist mindestens eine Halterung durch Verschwenken um ihre Schwenkachse wahlweise in eine Einführposition und in eine Parkposition verschwenkbar. Dabei ist die Sprüheinrichtung in der Einführposition innerhalb der Sprühkammer angeordnet oder durch Verschiebung in der Verschieberichtung in die Sprühkammer hinein bewegbar, ohne dass die Sprüheinrichtung um die Schwenkachse verschwenkt wird. In der Parkposition ist die Sprüheinrichtung nicht innerhalb der Sprühkammer angeordnet oder durch Verschiebung in der Verschieberichtung in die Sprühkammer einführbar, ohne dass die Sprüheinrichtung um die Schwenkachse verschwenkt wird. Hierdurch ist es möglich, durch Schwenken der Halterung die Sprüheinrichtung derart zu positionieren, dass sie nicht die Einführung einer anderen Sprüheinrichtung in die Sprühkammer behindert. Dennoch ist in dieser Parkposition die Sprüheinrichtung weiterhin in der Aufnahme aufgenommen und wird dadurch von der Halterung gehalten; die Sprüheinrichtung muss also nicht vom Bedienpersonal gehalten oder abgelegt werden.

Dieser Vorteil ist dann besonders ausgeprägt, wenn die Behandlungsvorrichtung gemäss weiteren Ausführungsformen mindestens zwei Halterungen umfasst, wobei eine erste Halterung in eine Parkposition bringbar ist und gleichzeitig eine zweite Halterung wahlweise in eine Parkposition oder eine Einführposition bringbar ist. Zum Austauschen einer ersten Sprüheinrichtung, welche von der ersten Halterung gehalten wird, kann also zunächst eine zweite Sprüheinrichtung in der zweiten Halterung bereitgestellt werden, welche sich in ihrer Parkposition befindet. Sodann kann die erste Halterung zusammen mit der ersten Sprüheinrichtung in ihre Parkposition überführt werden, woraufhin die zweite Halterung von ihrer Parkposition in ihre Einführposition bringbar ist.

Bei bekannten Behandlungsvorrichtungen zum Besprühen von Lebensmitteln und/oder Futtermitteln mit einer rotierend antreibbaren Sprühtrommel enthält die Sprühtrommel üblicherweise von ihrer Innenseite vorstehende Schikanen. Diese Schikanen werden üblicherweise an der Innenseite der Sprühtrommel eingeschweisst. Dies erzeugt jedoch unerwünschte Verformungen an der Sprühtrommel, die daher beispielsweise nicht mehr einen gewünschten kreisförmigen Querschnitt aufweist; eine aufwendige Nachbearbeitung ist dann erforderlich.

Folglich wird bei bisherigen Behandlungsvorrichtungen nur punktuell geschweisst und die restlichen Verbindungspartien mit Dichtmassen abgedichtet. Diese Lösung ist jedoch nicht sehr zufrieden stellend, da an den Übergangsstellen zwischen Innenseite der Sprühtrommel und Schikanen Kanten oder Spalte vorhanden sind, zwischen oder in denen sich Verschmutzungen anlagern können, die dort nur schwer zu entfernen sind.

Alternativ könnte eine Dichtmasse verwendet werden, um die Schikanen an der Innenseite der Sprühtrommel zu befestigen. Die Auswahl möglicher Dichtmassen ist jedoch sehr eingeschränkt, da diese sowohl mit dem versprühten Medium (z. B. Fett oder Öl) als auch mit dem besprühten Objekt (insbesondere Lebensmitteln) verträglich sein muss. Zudem könnte die Dichtmasse altern, so dass sich diese löst und in das Produkt gelangt, was insbesondere bei Lebensmitteln inakzeptabel ist. Die gelöste Dichtmasse könnte überdies eine Spalte hinterlassen, welche wiederum die bereits geschilderten Probleme nach sich ziehen.

Zur Lösung dieses Problems kann die Behandlungsvorrichtung mindestens eine an und/oder in der Sprühkammer angeordnete Schikanenhalterung aufweisen, welche derart ausgebildet und angeordnet ist, dass mindestens eine Schikane mit der Schikanenhalterung derart lösbar verbindbar ist, dass die Schikane im Inneren der Sprühkammer angeordnet ist.

Bei einer derartigen Ausbildung der Behandlungsvorrichtung kann die Schikane zur Reinigung einfach entnommen werden, indem sie von der Schikanenhalterung gelöst und entnommen wird. Die Schikane muss folglich nicht mehr im Inneren der Sprühtrommel gereinigt werden, sondern kann zuerst entnommen werden und dann ausserhalb der Sprühkammer gereinigt werden. Überdies ist bei entnommenen Schikanen auch die Innenseite der Sprühkammer wesentlich einfacher zur reinigen, da dort beispielsweise keine Kanten oder Spalte vorhanden sind, zwischen oder in denen sich Verschmutzungen anlagern könnten, die von dort nur schwer zu entfernen wären.

Vorteilhafterweise weist die Schikanenhalterung mindestens ein Befestigungsteil auf, mittels dessen die Schikanenhalterung an der Sprühkammer befestigt oder befestigbar ist. Insbesondere kann die Schikanenhalterung an einem Flansch befestigt oder befestigbar sein, welcher an einer Stirnseite der Sprühkammer angeordnet ist. An einem solchen Flansch kann das Befestigungsteil und damit die gesamte Schikanenhalterung besonders sicher an der Sprühkammer befestigt werden.

Weiterhin bevorzugt weist die Sprühkammer mindestens ein, bevorzugt mindestens zwei, besonders bevorzugt mindestens drei Halteelemente zum lösbaren Halten der Schikanen auf. Insbesondere können die Halteelemente zum Einspannen der Schikane ausgebildet sein. Bevorzugt erstreckt sich das mindestens eine Halteelement im Wesentlichen parallel zur Drehachse der Sprühkammer. Auf diese Weise kann eine Schikane, die sich parallel zur Drehachse der Sprühkammer erstreckt, senkrecht zur Drehachse und damit besonders stabil eingeklemmt werden.

Im Falle einer langen Sprühkammer kann diese an ihrer Innenwand optional noch weitere Halteelemente oder -stege zum Halten der Schikane aufweisen, beispielsweise zum Halten der Schikane in deren mittlerem Bereich.

Bevorzugt ist die Sprühkammer als rotierend antreibbare Sprühtrommel ausgebildet. Weiter bevorzugt weist die Innenseite der Sprühtrommel senkrecht zu einer Drehachse, um welche die Sprühtrommel rotierend antreibbar ist, einen im Wesentlichen kreisförmigen Querschnitt auf. Die Schikanen können senkrecht zur Drehachse beispielsweise ein im Wesentlichen dreiecksförmiges Profil aufweisen.

Im Folgenden wird die Erfindung anhand eines Ausführungsbeispieles und mehreren Zeichnungen erläutert. Dabei zeigen
- Figur 1:: eine erfindungsgemässe Behandlungsvorrichtung in einer perspektivischen Ansicht, wobei die Behandlungsvorrichtung eine Halterung mit einer Schiene und einem Sprühstab aufweist und sowohl die Schiene als auch der Sprühstab im Inneren einer Sprühkammer der Behandlungsvorrichtung aufgenommen sind;
- Figur 2:: die Behandlungsvorrichtung gemäss Figur 1, wobei die Schiene vollständig und der Sprühstab teilweise aus der Sprühkammer entfernt sind;
- Figur 3:: die Behandlungsvorrichtung gemäss Figuren 1 und 2, wobei der Sprühstab vollständig aus der Sprühkammer entfernt ist;
- Figur 4:: die Behandlungsvorrichtung gemäss Figuren 1 bis 3, wobei die Halterung in eine Parkposition verschwenkt ist;
- Figur 5:: die Behandlungsvorrichtung gemäss Figuren 1 bis 4, wobei sich die Halterung in der Parkposition befindet und sowohl die Schiene als auch der Sprühstab seitlich von der Sprühkammer angeordnet sind;
- Figur 6:: eine weitere erfindungsgemässe Behandlungsvorrichtung mit zwei Halterungen mit jeweils einem Sprühstab;
- Figur 7:: einen Ausschnitt einer Sprühtrommel einer weiteren erfindungsgemässen Behandlungsvorrichtung mit Schikanen- halterungen und einer zwischen diesen Schikanenhalterungen aufgenommenen Schikane.

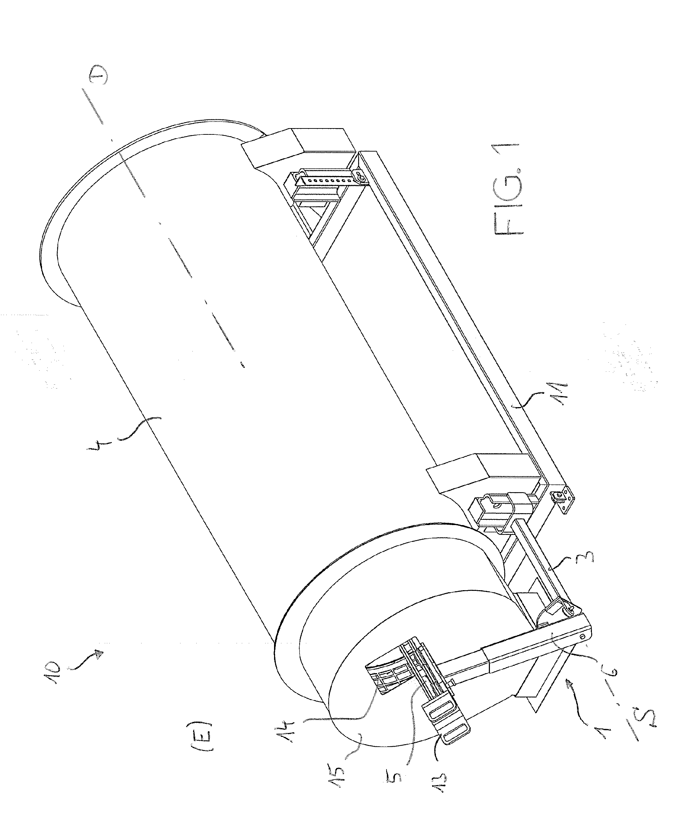

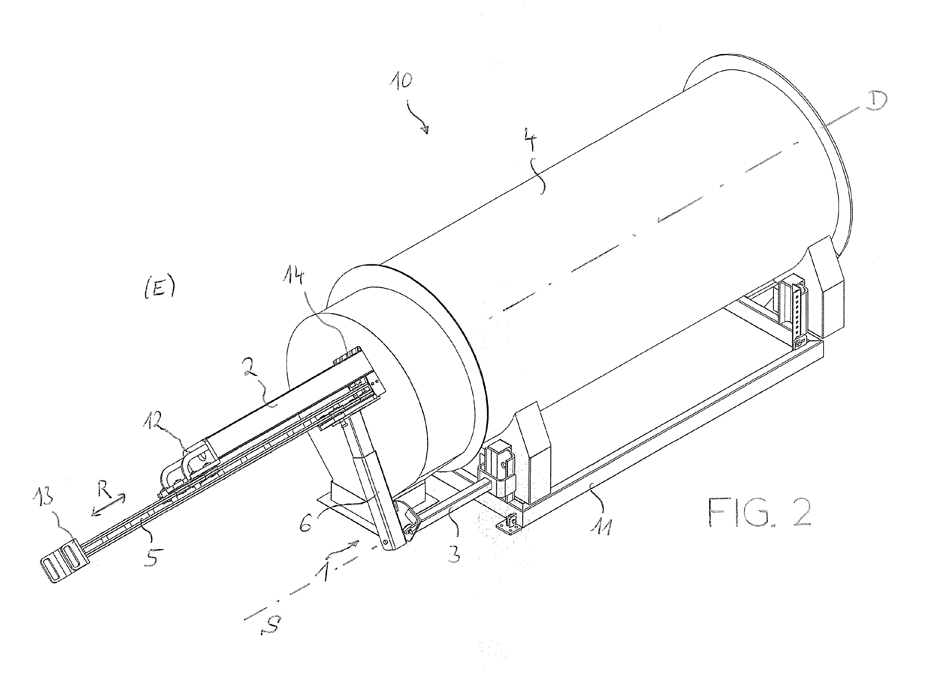

Die Figur 1 zeigt eine erfindungsgemässe Behandlungsvorrichtung 10 zum Besprühen von hier nicht erkennbaren Lebensmitteln und/oder Futtermitteln. Die Behandlungsvorrichtung 10 enthält eine Sprühkammer zur Aufnahme des Lebensmittels und/oder des Futtermittels. Die Sprühkammer ist als Sprühtrommel 4 ausgebildet, welche um eine Drehachse D rotierend antreibbar ist. Weiterhin enthält die Behandlungsvorrichtung 10 eine Halterung 1 für eine hier nicht erkennbare Sprüheinrichtung (siehe hierzu Figuren 2 bis 5). Die Halterung 1 weist ein Befestigungselement 3 auf, mit der sie an einem Grundkörper 11 der Behandlungsvorrichtung 10 befestigt ist.

Die Halterung 1 weist ferner eine Aufnahme für die Sprüheinrichtung auf, die als in dieser Figur ebenfalls nicht erkennbare Schiene ausgebildet ist (siehe hierfür Figuren 2 bis 5). Diese Schiene erstreckt sich durch eine Öffnung 14 in einer Stirnseite 15 der Behandlungsvorrichtung 10 bis in den Innenraum der Sprühtrommel 4. In Figur 1 liegt eine Einführposition E vor, in welcher sich der Sprühstab im Innenraum der Sprühtrommel 4 befindet. Ferner weist die Halterung 1 einen Schwenkarm 6 auf, welcher um eine Schwenkachse S relativ zum Befestigungselement 3 verschwenkbar ist und an welchem die Schiene verschiebbar angeordnet ist.

In Figur 2 ist die Behandlungsvorrichtung 10 in einer anderen Einstellung der Halterung 1 gezeigt. Gegenüber der in Figur 1 gezeigten Einstellung wurde die Schiene 5 mit Hilfe eines Griffelementes 13 in einer Verschieberichtung R relativ zum Schwenkarm 6 und damit auch relativ zum Befestigungselement 3 verschoben. Hierdurch ist die Schiene 5 vollständig aus der Sprühtrommel 4 entfernt. An dem der Sprühkammer 4 zugewandten Ende der Schiene 5 ist der Sprühstab 2 zu erkennen. Dieser wurde beim Verschieben der Schiene 5 in der Verschieberichtung R ebenfalls in der Verschieberichtung R relativ zum Befestigungselement 3 bewegt. Der Sprühstab 2 wird von einem Schlitten 12 gehalten, welcher in der Verschieberichtung R relativ zur Schiene 5 verschiebbar ist.

Alternativ zu dem hier beschriebenen Vorgehen ist es natürlich auch möglich, zunächst nur den Schlitten 12 zusammen mit dem Sprühstab 2 aus der Sprühtrommel 4 in der Verschieberichtung R herauszuziehen und erst anschliessend die Schiene 5 in der Verschieberichtung R relativ zum Befestigungselement 3 zu bewegen.

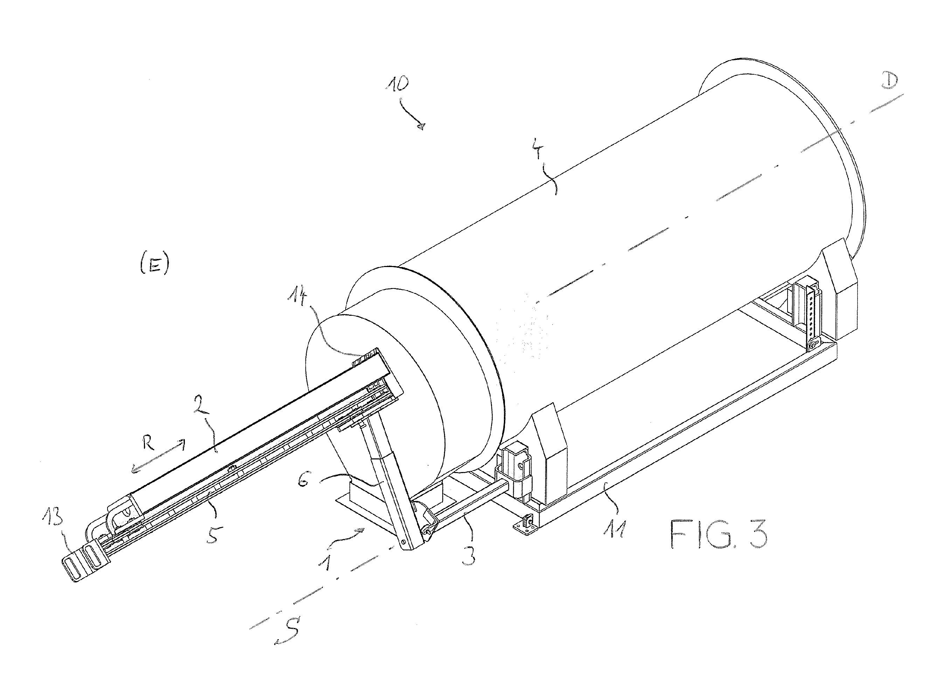

Zur Überführung in die in Figur 3 dargestellte Position wurde der Sprühstab 2 in die Verschieberichtung R relativ zur Schiene 5 verschoben. Da der Sprühstab 2 in der Verschieberichtung R um mehr als seine eigene Länge relativ zum Befestigungselement 3 verschiebbar ist, kann auf diese Weise der Sprühstab 2 vollständig aus der Sprühtrommel 4 hinaus bewegt werden. In Figur 3 wird weiterhin eine Einführposition E gezeigt, in welcher der Sprühstab 2 durch Verschiebung in der Verschieberichtung R in die Sprühtrommel 4 hinein bewegbar ist, ohne dass er um die Schwenkachse S herum verschwenkt werden muss.

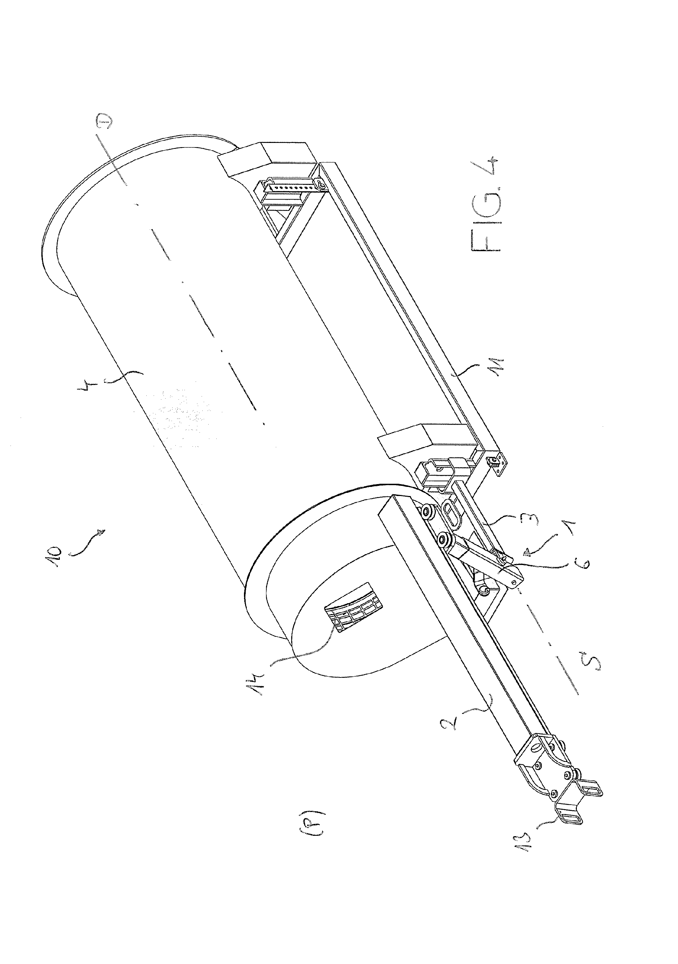

In Figur 4 ist eine weitere Position dargestellt, in welcher der Schwenkarm 6 um die Schwenkachse S verschwenkt wurde. Da die Verschieberichtung R und die Schwenkachse S parallel zueinander verlaufen, wird hierdurch der gesamte Sprühstab 2 von der Öffnung 14 der Sprühtrommel 4 entfernt. Da der Sprühstab 2 parallel zur Verschieberichtung R ausgerichtet ist, bleibt die Ausrichtung des Sprühstabes 2 auch bei der Schwenkbewegung unverändert; die Längsrichtung der Schiene 5 und des Sprühstabes 2 nach dem Verschwenken (vgl. Figur 4) ist also parallel zur Längsrichtung vor dem Verschwenken (vgl. Figur 3). Sowohl die Schiene 5 als auch der Sprühstab 2 werden daher nur sehr wenig von der verlängerten Drehachse D der Sprühtrommel 4 entfernt, so dass dieser Aufbau äusserst Platz sparend ist. In Figur 4 liegt im Gegensatz zu den Figuren 1 bis 3 eine Parkposition P vor, in welcher der Sprühstab 2 nicht durch Verschiebung in der Verschieberichtung R in die Sprühtrommel 4 hineinbewegbar ist, ohne dass der Sprühstab um die Schwenkachse S verschwenkt wird.

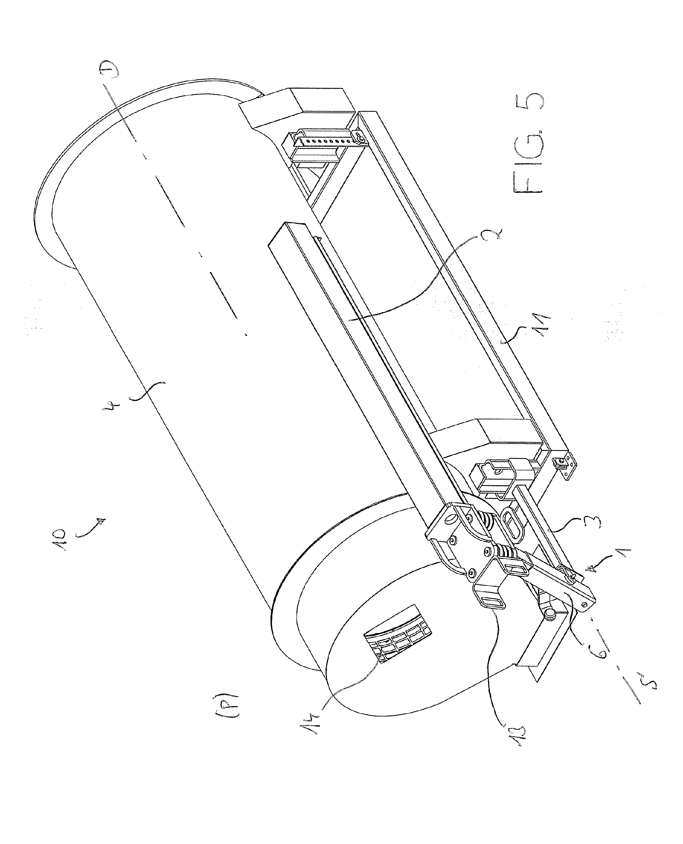

Schliesslich ist in Figur 5 noch eine weitere Position gezeigt, in welcher sich die Halterung weiterhin in der Parkposition P befindet. Zum Übergang von der in Figur 4 gezeigten Position in die in Figur 5 gezeigte wurde die Schiene 5 zusammen mit dem Sprühstab 2 nochmals in der Verschieberichtung R verschoben, so dass sich nun sowohl die Schiene 5 als auch der Sprühstab 2 seitlich von der Sprühtrommel 4 befinden.

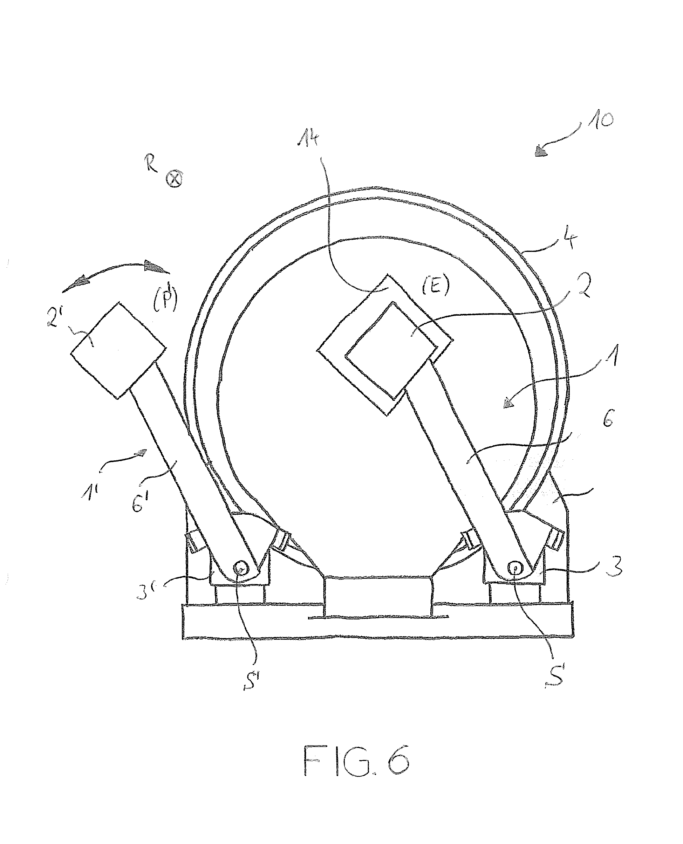

Figur 6 zeigt eine Skizze einer Frontalansicht auf eine weitere erfindungsgemässe Behandlungsvorrichtung 10 mit zwei Halterungen 1, 1' mit jeweils einem Sprühstab 2 bzw. 2'. Die Halterungen 1, 1' sind aufgebaut wie die in den Figuren 1 bis 5 beschriebenen. Sie enthalten jeweils einen Schwenkarm 6 bzw. 6', welche um jeweilige Schwenkachsen S bzw. S' relativ zu einem jeweiligen Befestigungselement 3 bzw. 3' und damit relativ zum Grundkörper 11 der Behandlungsvorrichtung 10 verschwenkbar sind.

Die Halterung 1 befindet sich in der dargestellten Einstellung in einer Einführposition E, in welcher der Sprühstab 2 innerhalb der Sprühtrommel 4 angeordnet ist oder durch Verschiebung in der Verschieberichtung R in die Sprühtrommel 4 hineinbewegbar ist. Die Verschieberichtung R verläuft dabei senkrecht zur Zeichenebene. Die Halterung 1' befindet sich hingegen in einer Parkposition P, in welcher der Sprühstab 2' nicht innerhalb der Sprühtrommel 4 angeordnet ist und auch nicht durch blosse Verschiebung in der Verschieberichtung R in die Sprühtrommel hinein bewegbar ist.

Durch Schwenken der Halterung 1 im Uhrzeigersinn um die Schwenkachse S kann die Halterung 1 von der Einführposition E in eine hier nicht dargestellte Parkposition P überführt werden. Anschliessend kann die Halterung 1' durch Schwenken um die Schwenkachse S' im Uhrzeigersinn von der Parkposition P in eine hier nicht dargestellte Einführposition E überführt werden.

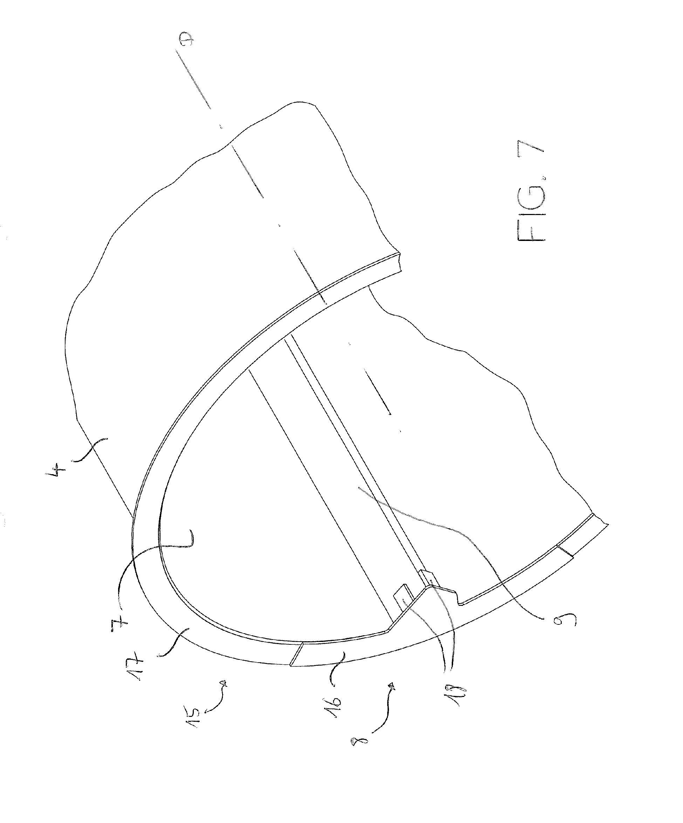

In Figur 7 ist ein Ausschnitt einer Sprühtrommel 4 mit einer ersten Schikanenhalterung 8 und einem Teil einer Schikane 9 gezeigt. Die erste Schikanenhalterung 8 umfasst ein Befestigungsteil 16, welches an einem Flansch 17 an einer Stirnseite 15 der Sprühtrommel 4 befestigt ist. Die erste Schikanenhalterung 8 weist drei Halteelemente 18 auf, welche sich parallel zur Drehachse D der Sprühtrommel 4 erstrecken. Von den drei Halteelementen 18 sind in Figur 7 nur zwei erkennbar.

Die drei Halteelemente 18 halten ein erstes Ende einer Schikane 9. Die Schikane 9 hat im Wesentlichen die Form eines länglichen Prismas mit einer dreieckigen Querschnittsfläche und erstreckt sich mit ihrer längsten Ausdehnung parallel zur Drehachse D der Sprühtrommel 4. Alternativ kann die Querschnittsfläche der Schikane aber auch im Wesentlichen rechteckig sein. Jedes der Halteelemente 18 hält eine Seitenfläche der Schikane 8. Die dritte Seitenfläche der Schikane 9 ist in Kontakt mit einer Innenseite 7 der Sprühtrommel. Ein dem ersten Ende gegenüberliegendes zweites Ende der Schikane 9 (in der Zeichnung nicht dargestellt) ist mit einer zweiten Schikanenhalterung lösbar verbunden (ebenfalls nicht dargestellt). Die zweite Schikanenhalterung ist wie die erste Schikanenhalterung 8 aufgebaut und an einer der ersten Stirnseite gegenüberliegenden zweiten Stirnseite der Sprühtrommel 4 angeordnet.

In der in Figur 7 dargestellten Position befindet sich die Schikane im Inneren der Sprühtrommel 4. Die Schikane 9 ist lösbar mit der ersten Schikanenhalterung 8 und der zweiten Schikanenhalterung verbindbar. Die Schikane 9 kann daher leicht aus dem Inneren der Sprühtrommel 4 entfernt werden, beispielsweise zu Reinigungszwecken.

## Patentansprüche

1. Halterung (1) für eine Sprüheinrichtung, insbesondere für einen Sprühstab (2), enthaltend
- ein Befestigungselement (3) zum Befestigen der Halterung (1) an einer Behandlungsvorrichtung (10) zum Besprühen von Lebensmitteln und/oder Futtermitteln, insbesondere an einem Grundkörper (11) der Behandlungsvorrichtung (10),
- mindestens eine Aufnahme für eine Sprüheinrichtung, insbesondere für einen Sprühstab (2),
**dadurch gekennzeichnet, dass**
die Halterung (1) derart ausgebildet ist, dass eine in der Aufnahme aufgenommene Sprüheinrichtung
- in einer Verschieberichtung (R) relativ zum Befestigungselement (3) verschiebbar ist, insbesondere in eine Sprühkammer der Behandlungsvorrichtung (10) hinein oder aus der Sprühkammer hinaus, und
- um eine Schwenkachse (S) relativ zum Befestigungselement (3) verschwenkbar ist.

2. Halterung (1) gemäss Anspruch 1,
**dadurch gekennzeichnet, dass**
die Aufnahme als Schiene (5) ausgebildet ist, relativ zu welcher die Sprüheinrichtung in der Verschieberichtung (R) verschiebbar ist.

3. Halterung (1) gemäss einem der Ansprüche 1 und 2,
**dadurch gekennzeichnet, dass**
die Aufnahme relativ zum Befestigungselement (3) verschiebbar ist, insbesondere in der Verschieberichtung (R).

4. Halterung (1) gemäss einem der Ansprüche 1 bis 3,
**dadurch gekennzeichnet, dass**
die Schwenkachse (S) unter einem Winkel von höchstens 60°, bevorzugt höchstens 30°, weiter bevorzugt höchstens 10°, besonders bevorzugt im Wesentlichen parallel zur Verschieberichtung (R) verläuft.

5. Halterung (1) gemäss einem der Ansprüche 1 bis 4,
**gekennzeichnet durch**
**durch** einen Schwenkarm (6), welcher um die Schwenkachse (S) relativ zum Befestigungselement (3) verschwenkbar ist und an welchem die Aufnahme insbesondere verschiebbar angeordnet ist.

6. Baugruppe enthaltend
- mindestens eine Sprüheinrichtung, insbesondere mindestens einen Sprühstab (2),
- mindestens eine Halterung (1) für die Sprüheinrichtung gemäss einem der Ansprüche 1 bis 5.

7. Baugruppe gemäss Anspruch 6,
**dadurch gekennzeichnet, dass**
die Sprüheinrichtung lösbar mit der Aufnahme verbindbar oder verbunden ist.

8. Baugruppe gemäss einem der Ansprüche 6 und 7,
**dadurch gekennzeichnet, dass**
die Halterung (1) derart ausgebildet ist, dass die in der Aufnahme aufgenommene Sprüheinrichtung in der Verschieberichtung (R) mindestens um die in der Verschieberichtung (R) gemessene Ausdehnung der Sprüheinrichtung relativ zum Befestigungselement (3) verschiebbar ist.

9. Behandlungsvorrichtung (10) zum Besprühen von Lebensmitteln und/oder Futtermitteln, enthaltend
- mindestens eine Sprühkammer zur Aufnahme des Lebensmittels und/oder des Futtermittels, insbesondere eine rotierend antreibbare Sprühtrommel,
- mindestens eine Halterung (1) gemäss einem der Ansprüche 1 bis 5 und/oder mindestens eine Baugruppe gemäss einem der Ansprüche 6 bis 8,
wobei
- das Befestigungselement (3) mit einem Grundkörper (11) der Behandlungsvorrichtung (10) verbunden oder verbindbar ist und
- eine in der Aufnahme aufgenommene Sprüheinrichtung durch Verschiebung in der Verschieberichtung (R) wahlweise in die Sprühkammer hinein oder aus der Sprühkammer hinaus bewegbar ist.

10. Behandlungsvorrichtung (10) gemäss Anspruch 9,
**dadurch gekennzeichnet, dass**
die Verschieberichtung (R) und/oder die Schwenkachse (S) unter einem Winkel zu einer Drehachse (D) verläuft, um welche die Sprühtrommel rotierend antreibbar ist, wobei der Winkel höchstens 60°, bevorzugt höchstens 30°, weiter bevorzugt höchstens 10° beträgt, wobei besonders bevorzugt die Verschieberichtung (R) und/oder die Schwenkachse (S) im Wesentlichen parallel zur Drehachse (D) verläuft.

11. Behandlungsvorrichtung (10) gemäss einem der Ansprüche 9 und 10,
**dadurch gekennzeichnet, dass**
- mindestens Halterung (1) durch Verschwenken um ihre Schwenkachse (S) wahlweise in eine Einführposition (E) und in eine Parkposition (P,P') verschwenkbar ist,
- in der Einführposition (E) die Sprüheinrichtung innerhalb der Sprühkammer angeordnet ist oder durch Verschiebung in der Verschieberichtung (R) in die Sprühkammer hinein bewegbar ist,
- in der Parkposition (P,P') die Sprüheinrichtung nicht innerhalb der Sprühkammer angeordnet ist oder durch Verschiebung in der Verschieberichtung (R) in die Sprühkammer hinein bewegbar ist.

12. Behandlungsvorrichtung (10) gemäss Anspruch 11,
**dadurch gekennzeichnet, dass**
die Behandlungsvorrichtung mindestens zwei Halterungen (1) umfasst, wobei eine erste Halterung (1) in eine Parkposition (P,P') bringbar ist und gleichzeitig eine zweite Halterung wahlweise in eine Parkposition (P,P') oder eine Einführposition (E) bringbar ist.

13. Behandlungsvorrichtung (10) zum Besprühen von Lebensmitteln und/oder Futtermitteln, insbesondere gemäss einem der Ansprüche 9 bis 12, enthaltend
- mindestens eine Sprühkammer zur Aufnahme des Lebensmittel und/oder des Futtermittels,
- mindestens eine Baugruppe gemäss einem der Ansprüche 6
bis 8,
**gekennzeichnet durch**
mindestens eine an und/oder in der Sprühkammer angeordnete Schikanenhalterung (8), welche derart ausgebildet und angeordnet ist, dass mindestens eine Schikane (9) mit der Schikanenhalterung (8) derart lösbar verbindbar ist, dass die Schikane (9) im Inneren der Sprühkammer angeordnet ist.

14. Behandlungsvorrichtung (10) gemäss Anspruche 13,
**dadurch gekennzeichnet, dass**
die Schikanenhalterung (8) mindestens ein Befestigungsteil (16) aufweist, mittels dessen die Schikanenhalterung (8) an der Sprühkammer befestigt oder befestigbar ist, insbesondere an einem Flansch (17), welcher an einer Stirnseite (15) der Sprühkammer angeordnet ist.

15. Behandlungsvorrichtung (10) gemäss einem der Ansprüche 13 und 14,
**dadurch gekennzeichnet, dass**
die Schikanenhalterung (8) mindestens ein, bevorzugt mindestens zwei, besonders bevorzugt mindestens drei Halteelemente (18) zum lösbaren Halten, insbesondere Einspannen, der Schikane (9) aufweist, wobei sich das Halteelement (18) bevorzugt im Wesentlichen parallel zur Drehachse (D) der Sprühkammer erstreckt.
